# EUROPEAN PATENT APPLICATION

(11) **EP 4 465 169 A1**
(43) Date of publication of application: **20.11.2024**
(21) Application number: 23216026.7
(22) Date of filing: 12.12.2023
(51) Int. Cl.: G06F 8/656

(54) **METHOD AND APPARATUS FOR HOT UPGRADE OR LIVE RECOVERY OF STORAGE BACKEND SOFTWARE BASED ON IPU OR DPU**

(30) Priority: 16.05.2023 WO PCT/CN2023/094540; 27.06.2023 US 202318214999
(71) Applicant: INTEL Corporation, Santa Clara, CA 95054 (US)
(72) Inventor: ZENG, Jun, Santa Clara 95054 (US); PEI, Di, Santa Clara 95054 (US); CAO, Gang, Santa Clara 95054 (US); LIU, Changpeng, Santa Clara 95054 (US)
(74) Representative: Rummler, Felix

(57) **Abstract**

Methods and apparatus for hot upgrade or live recovery of storage backend software on an IPU (Infrastructure Processing Unit) or DPU (Data Processing Unit). Configuration space and queue related information associated with Input-Output (IO) operations for storage device(s) operatively coupled to the IPU/DPU are saved in shared memory. Following the hot upgrade or live recovery, the configuration space and queue related information are restored and IO operations are restarted at a last completed point prior to initiation of the hot upgrade or live recovery. Additionally, the newly started backend software is reassociated with a front-end host driver. The storage backend software may include instructions for executing primary and secondary processes using a multi-process model such as a Storage Performance Development Kit (SPDK) multi-process model.

## Description

### CLAIM OF PRIORITY

The present application claims the benefit of priority to Patent Cooperation Treaty (PCT) Application No. PCT/CN2023/094540, filed May 16, 2023, the entire content of which is incorporated herein by reference.

### BACKGROUND INFORMATION

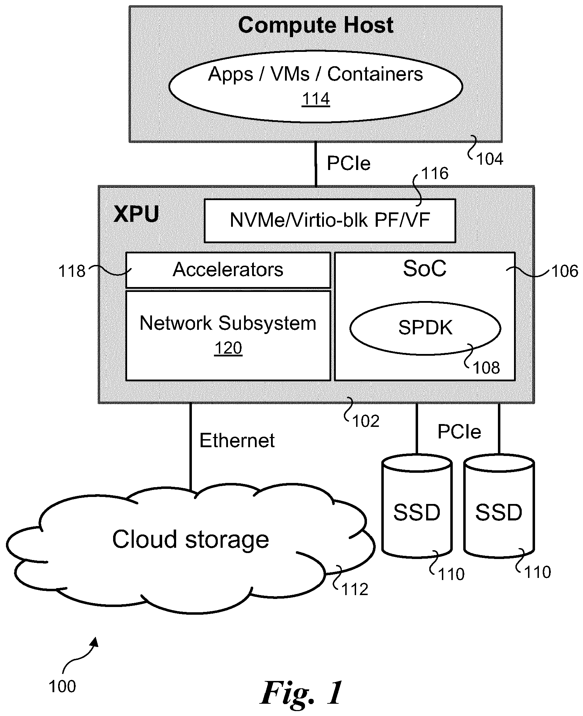

Today, companies use IPUs (Infrastructure Processing Units) or DPUs (Data Processing Units) to provide a virtio-blk/NVMe (Non-volatile Memory Express) storage interface to a compute host with the backend emulated in software, such as shown in a system 100 in Figure 1. In this diagram an XPU (*aka* other processing unit) card 102 is used to represent IPUs and DPUs. The IPU/DPU hides the backend implementation differences and adaptation needs from the compute host 104, offloads relevant adaptation logic, and provides the storage application with more convenience.

In the example of Figure 1, the backend software running on the SoC (System on Chip) processor 106 is implemented using the SPDK (Storage Performance Development Kit, https://spdk.io) framework 108. The backend software can use one or more NVMe solid-state drives (SSDs) 110 locally attached to an IPU/DPU card or a remote storage service 112 connected through a high-speed Ethernet link or Fiber (*e.g.,* 100G or higher) as resources to provide a unified access interface for the host. As further shown in system 100, Apps / VMs / Containers 114 are running on compute host 104, while XPU card 102 further includes an NVMe/Virtio-blk PF/VF (Physical Function and Virtual Function) 116, accelerators 118, and network subsystem 120.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a diagram illustrating use IPUs or DPUs to provide a virtio-blk/NVMe storage interface to host with the backend emulated in software;
Figure 2 is a diagram illustrating queue memory relationship between a host driver and backend controller;
Figure 3 is a flowchart illustrating operations performed to implement a hot upgrade/live recovery feature, according to one embodiment;
Figure 4 is a diagram illustrating a shared memory feature supported by a DPDK multi-process mechanism;
Figure 5 is a diagram illustrating some key components and operations, according to one embodiment;
Figure 6 is a diagram illustrating the backend of a software multi-process model, according to one embodiment;
Figure 7 is a flowchart illustrating operations associated with saving the backend emulated configuration space and queue related information before doing an upgrade or restart, according to one embodiment;
Figure 8 is a flowchart illustrating an embodiment of the multi-process flow; and
Figure 9 is a diagram of an exemplary IPU card, according to one embodiment.

### DETAILED DESCRIPTION

Embodiments of methods and apparatus for hot upgrade or live recovery of storage backend software based on an IPU or DPU are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

To ensure the continuity of service, it is necessary to keep the backend software running continually. One big challenge is how to deal with the upgrade and abnormal exit scenario of the backend software. Currently, when upgrading the backend software, it may be required to stop traffic on the front-end host side, restart application(s) on the host or even restart the entire host system after the upgrade. The impact is also the same when the backend software crashes unexpectedly. The ideal situation is that the front-end host application does not need to stop/restart (or even does not know it) during the upgrade of backend software and can run continually after the backend software resumes from an abnormal exit.

In accordance with aspects of the embodiments disclosed herein, a method of implementing hot upgrade/live recovery feature for virtio-blk/NVMe service with backend software based on SPDK running on an IPU/DPU is provided. For a virtio-blk/NVMe PCIe device presented to the host, the application configures and uses it through its configuration space and allocated Admin/IO (Input-Output) queues. The backend software emulates the configuration space and processes the Admin/IO queues requests for the PCIe device provided by IPU/DPU. To achieve the goal of hot upgrade/live recovery, it is necessary to maintain the status of the PCIe configuration space of the original device(controller) and the queue address and index information during the restart of the backend software. For the PCIe configuration space, the firmware (FW) of the IPU/DPU delivers the host requests to the backend software and get the responses back to the host, so the backend software emulated configuration space should be restored from the previous data and be reassociated with the host PF/VF after restart. For the Admin/IO queues, they are allocated by the driver software on the front-end host and the memory addresses of queues are delivered to IPU/DPU FW and to be accessed through direct memory access (DMA) action.

In addition, the backend software can access these queue addresses through the IPU/DPU FW. Accordingly, these queues are always there during the restart of backend software on IPU/DPU. Furthermore, the driver software can continually put new requests to these queues until reaching the full line of each queue during this mean time. So, if we store the queue address and last completed queue entry index of each queue, then we can access each queue and re-execute all requests following that index, to complete the inflight IOs and newly added IOs. Thus, we can resume the ongoing traffic of the application on front-end host and let it run continually.

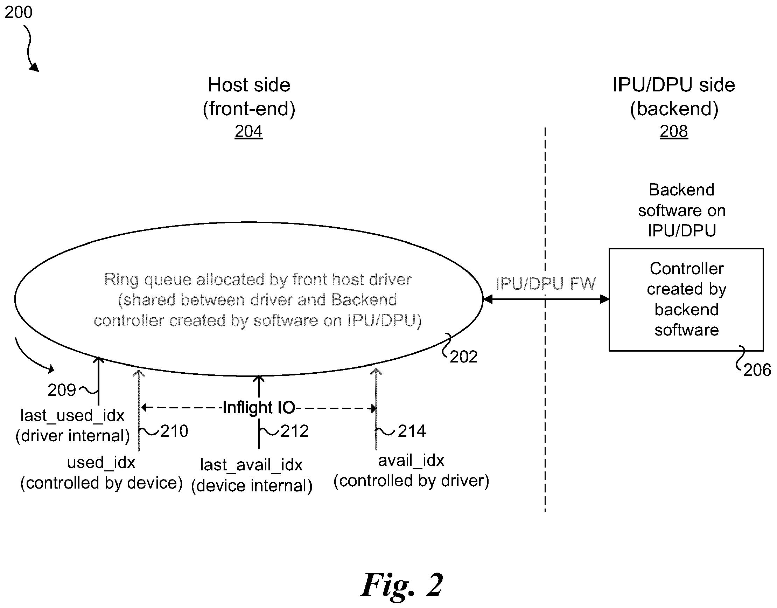

Consider a queue of virtio-blk service as an example. Figure 2 shows a diagram 200 depicted host side (front-end) components/functions and IPU/DPU side (backend) software 208. A ring queue 202 is allocated by the front-end host driver and is shared between the driver and the backend controller 206 created by backend software 208 on the IPU/DPU.

Consider an IO queue of virtio-blk service as an example. Diagram 200 in Figure 2 shows a queue memory structure (ring queue) 202 and communication between a front-end host driver 204 and a controller 206 emulated by backend software 208 on the IPU/DPU. Ring queue 202 maintains four indexes (idx): a last_used_idx 209 (internal to host driver 204), a used_idx 210 (controlled by the IO device), a last_avail_idx 212 (internal to the IO device), and an avial_idx 214 (controlled by host driver 204).

Ring queue 202 is maintained by the host throughout restart of the backend software on the IPU/DPU. As the start of the restart, used_idx 210 will stop increasing, since this is controlled by the IO device attached to the IPU/DPU. In the meanwhile, there will be inflight IO contents (messages and/or data) - those IO contents will be tracked with avail_idx 214.

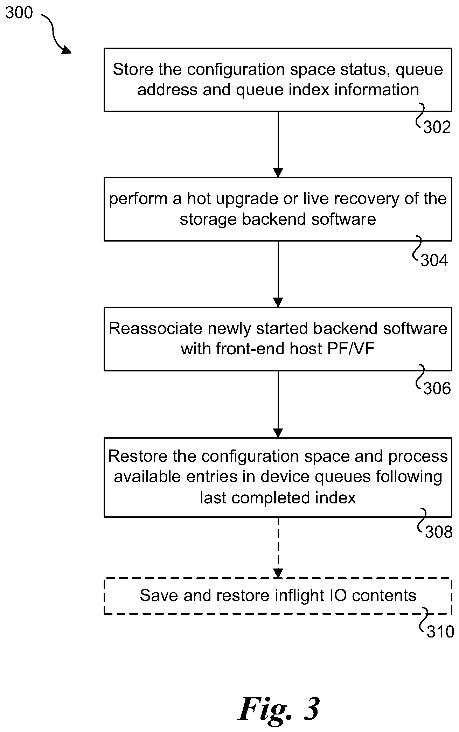

Figure 3 shows a flowchart 300 illustrating operations performed to implement a hot upgrade/live recovery feature, according to one embodiment. In block 302, the configuration space status, queue address and queue index information are stored. In block 304, a hot upgrade or live recovery of the storage back software is performed. In block 306, newly started backend software is reassociated with the front-end host PF/VF. In block 308, the configuration space is restored and available entries in the device queues are processed following the last completed index in the queue index information. Depending on the implementation of IPU/DPU firmware, the inflight IO contents may also be saved or restored through some methods (such as the shared memory scheme described below). This optional operation is shown in an optional block 310.

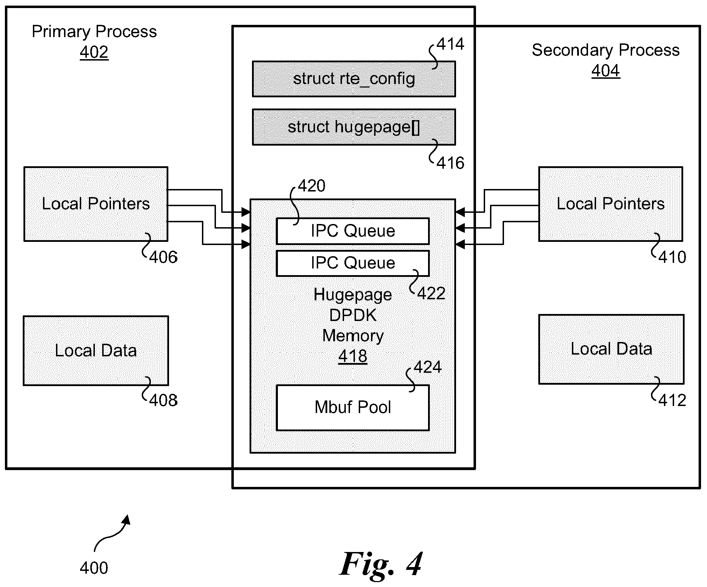

As discussed above, in some embodiments the SPDK framework is used. One feature of the SPDK framework is a multi-process sharing memory mechanism, which is illustrated in diagram 400 of Figure 4. SPDK uses huge-page memory using the open-source DPDK (Data Plane Development Kit) framework and can support memory sharing between multi-process through DPDK multi-process mechanism: one primary process 402 and one or more secondary process(es) 404. Based on this, some type of memory (such as through rte_malloc) can be allocated in one process and accessed/freed in other process(es), and some type of memory (like rte_mempool) can only be allocated and freed in the same process but can be accessed in another process (due to the implementation of DPDK). The huge-page memory will not be reclaimed automatically if it is allocated in secondary process without deallocation, even after the secondary process has exited, and will be kept until the exit of primary process.

In further detail, primary process 402 employs local pointers 406 and local data 408, while each secondary process 404 employs local pointers 410 and local data 412. The shared components include an rte configuration structure (struct rte_config) 414, a hugepage structure (struct hugepage[]) 416, hugepage DPDK memory 418. Example data structures stored in hugepage DPDK memory 418 include a pair of IPC queues 420 and 422 and a memory buffer (Mbuf) pool 424.

### Key Components and Method Details

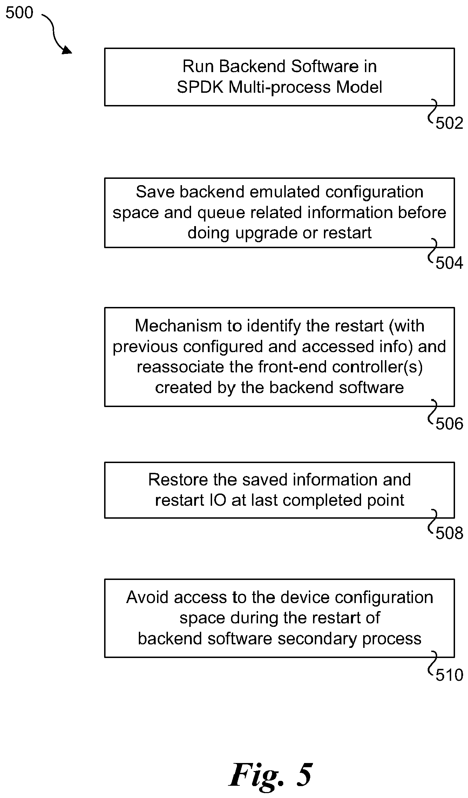

Key components and operations are shown diagram 500 of Figure 5. In a block 502, backend software is run in an SPDK multi-process model, such as shown in SPDK multi-process model of Figure 4 and described above. This begins with starting two SPDK processes. The first SPDK process is the primary process, which is mainly used to allocate, initialize and manage common resources (including memory to store extra information like configuration space, queue address and related information discussed above), and with limited logic, which makes it stable and can run continually almost without abnormal exit due to itself. The second SPDK process is a secondary process that is used to implement the specific backend software traffic logic. Depending on the IPU/DPU FW, the amount of resources that can be allocated and managed by the primary process may be differ, where the more the amount of resources is managed in the primary process, the easier for the implementation of hot upgrade/live recovery feature among the multi-processes, but this also decreases the stability of the primary process.

Memory allocated in the primary process is allocated for shared memory to store needed information in the secondary process. A mechanism for reclaiming unreleased huge-page memory in the secondary process when the secondary process restart is also added. For a huge-page memory type that should only be allocated and freed in the same process, memory is allocated in primary process and tried to get and reuse them in secondary process, and the secondary process does not need to deal with the allocation and reclaim in this scenario. These memories are reclaimed after the secondary exit and before the restart. For a huge-page memory type that can be allocated in a secondary process and freed in primary process, the memory is allocated as usual in the secondary process and record the memory pointer to a structure (like TAILQ list/array or others) which allocated in primary process. If the memory pointer that has been recorded in this structure is freed normally in the secondary process, then the corresponding entry will be removed from this structure. Thus, those unreleased memory will be reclaimed in the primary process after the secondary process exit.

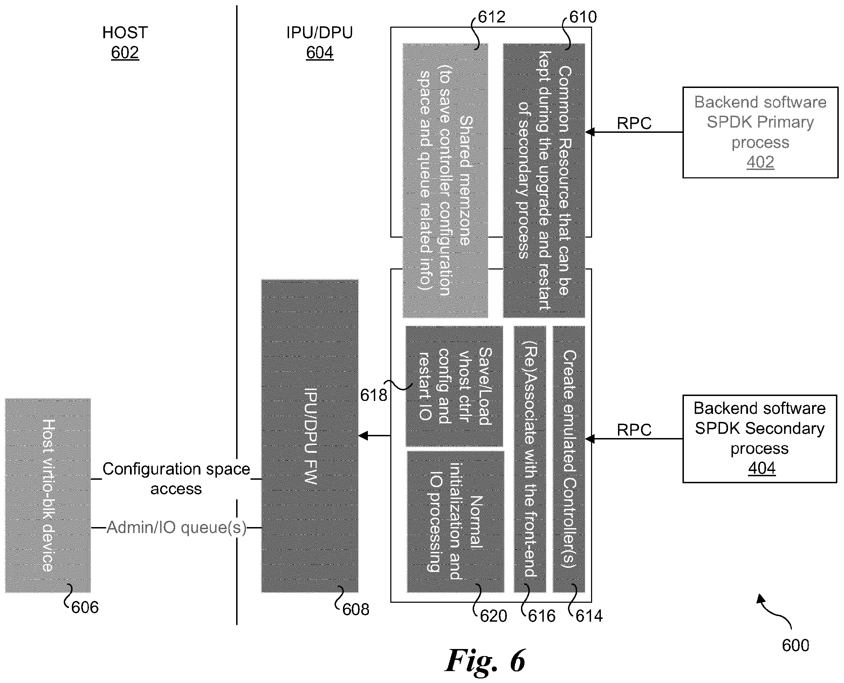

Figure 6 shows an example of the backend software multi process model, according to one embodiment. As illustrated, the software and firmware components are implemented on a host 602 and an IPU/DPU 604. The host includes a host virtio-blk device 606 that communicates IPU/DPU FW 608. The other components on IPU/DPU 604 include blocks 610, 612, 614, 616, 618, and 620.

Block 610 is a common resource that can be kept during the upgrade and restart of the secondary process. The SPDK primary process 402 employs the remote procedure call (RPC) protocol to communicate with block 610. Block 612 includes logic for implementing a shared memory zone that is used to save controller configuration space and queue related information. Block 614 is used to create one or more emulated controllers and communicates with SPDK secondary process 404 using RPC. Block 616 is used to (re)associate with the front-end drive on the host. Block 618 is used to save/load the vhost controller configuration and restart IO, while block 620 performs normal initialization and IO processing.

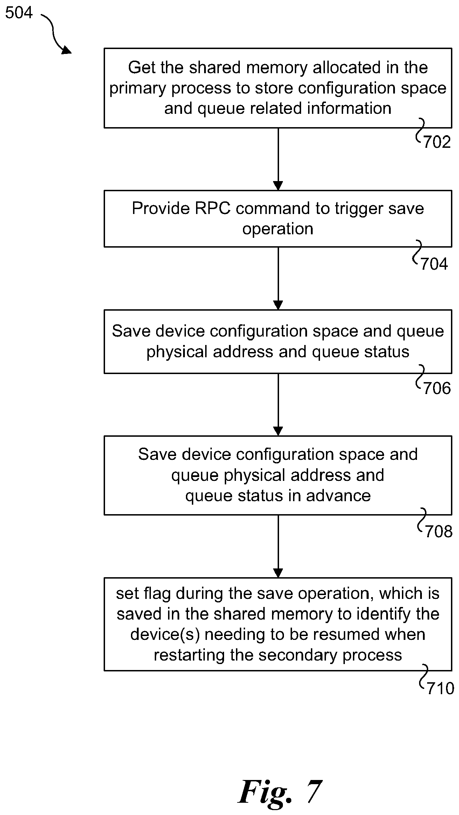

Returning to Figure 5, block 504 includes logic to save backend emulated configuration space and queue related information before doing upgrade or restart. As shown in Figure 7, this logic performs the following operations:

Logic in block 702 is used to get the shared memory allocated in the primary process to store configuration space and queue related information. Block 704 provides an RPC command to trigger save operation. This operation can be done repeatedly, where a new trigger will override the previous one. As an option, this operation can also be done without using RPC, such as performing a save operation after initialization automatically and then refresh the changed information in backend periodically or with other algorithms.

Block 706 saves the device configuration space and queue physical address and queue status. During the exit of the secondary process, the queue produce index from the host may keep going and the consume index from the backend may stop increasing. For some service like virtio-blk, we can restore the last completed index from the queue memory itself without saving the last complemented index; for other service we can record the latest complemented index with some algorithm (e.g., periodically record, record every X complemented entries, ...) automatically (this information is saved in memory, so the extra save operation does not affect much in performance).

Block 708 saves the device configuration space and queue physical address and queue status in advance. For example, this may include saving needed information actively after the initialization of PF/VF and then refresh them when some changes are made, saving configuration space accessed from host, queue disabled/enabled by host driver *etc.* As a result, the saved information is always new enough to recover the service after the restart of backend software secondary process. Block 710 is used to set a flag during the save operation, which is saved in the shared memory to identify the device(s) needing to be resumed when restarting the secondary process.

Another key component is a mechanism to identify the restart (with previous configured and accessed info) and reassociate the front-end controller(s) created by the backend software, as shown in a block 506 in Figure 5. This mechanism uses the flag set in previous save operation to identify whether this startup of the secondary process is a normal startup or a restart. It also uses the same parameter(s) to create the backend controller(s) and related resource. If it is a restart, skip full initialization of the backend controller(s), and communicate with IPU/DPU FW to reassociate the newly created backend controller(s) with front-end PF/VF. Depending on the implementation of IPU/DPU FW, we may also need to save and restore inflight IO contents through shared memory between primary and secondary process during the restart - e.g., saving Inflight IO contents before the exit of secondary process and restoring them after the restart of secondary process.

Another operation is to restore the saved information and restart IO at last completed point, as shown in block 508 of Figure 5. This includes the following operations:
1) Trigged by RPC command or do restore operation automatically according to the flag used to identify the restart.
2) Restore the device configuration and queue info from shared memory and restart the IO process from the last completed index.
3) For some implementation, may also need to restore the saved inflight IO contents from shared memory kept between primary and secondary process.

As shown in block 510 in Figure 5, access to the device configuration space is avoided during the restart of backend software secondary process. The configuration space access request may not be processed and responded without the backend software secondary process, so this operation should avoid or hold by the IPU/DPU FW (like just respond an error response temporally).

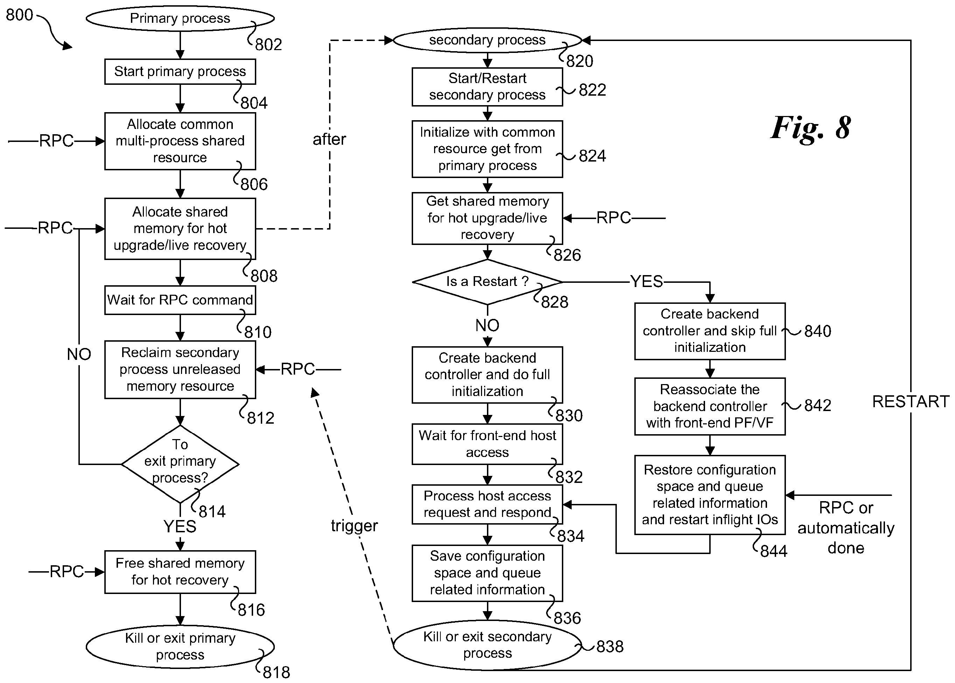

A flowchart 800 illustrating an embodiment of the multi-process flow is shown in Figure 8. The primary process operations 802 are started in block 804. In blocks 806 and 808 a common multi-process share resource is allocated, and a shared memory for hot upgrade or live recovery is allocated in response to respective RPC commands. In block 810 the primary process waits for an RPC command, which is triggered by when the secondary process is killed or exited in an end block 838. When the triggered RPC is received in block 812, the primary process reclaims the secondary process unreleased memory resource.

In a decision block 814 a determination is made to whether the primary process is to exit. If the answer is NO, the logic returns to block 808. If the answer is YES, and RPC command is received at block 816, which frees the shared memory for hot memory, followed by the primary process being killed or exiting in an end block 818.

The operations and logic for secondary process 820 is shown on the righthand portion of Figure 8. As shown by the dashed line labeled "after", the secondary process is initially started following the shared memory for hot update or live recovery being allocated in block 808. In block 822 the secondary process is started (the first time) or restarted (as applicable). In block 824 the common resource obtained from the primary process is initialized, while in a block 826 the shared memory for hot upgrade or live recovery is obtained in response to an RPC command.

In decision block 828 a determination is made to whether this is a restart. If the answer is NO, the logic proceeds to block 830 in which a backend controller is created, and a full initialization is performed. In block 832 the secondary process waits for front-end host access, and the host access request is processed and responded to in block 834. In a block 836 the configuration space and queue related information is saved, followed by the secondary process being killed or exiting in end block 838.

Returning to decision block 828, if this is a Restart, the answer is YES and the logic proceeds to block 840 in which the backend controller is created while skipping full initialization. In block 842 the backend controller is reassociated with the front-end PF/VF. The configuration space and queue related information is restored and the inflight IOs are restarted in block 844. The operations in block 844 may be done automatically or in response to an RPC command. The logic then flows to block 834.

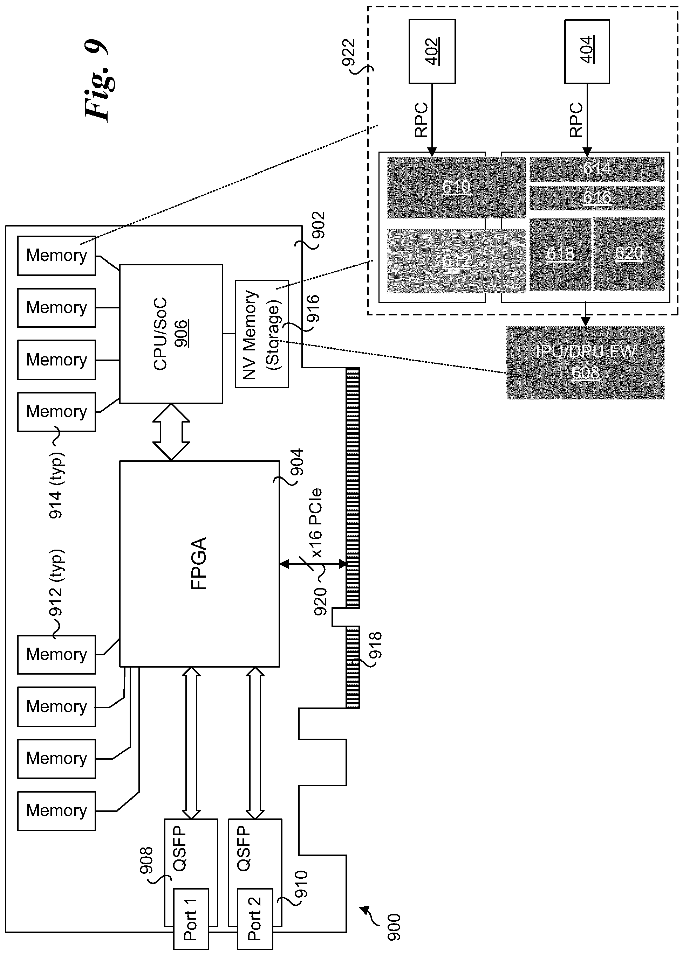

Figure 9 shows one embodiment of IPU 900 comprising a PCIe (Peripheral Component Interconnect Express) card including a circuit board 902 having a PCIe edge connector to which various integrated circuit (IC) chips are mounted. The IC chips include an FPGA 904, a CPU/SOC 906, a pair of QSFP (Quad Small Form Factor Pluggable) modules 908 and 910, memory (e.g., DDR4 or DDR5 DRAM) chips 912 and 914, and non-volatile (NV) memory 916 used for local persistent storage. FPGA 904 includes a PCIe interface (not shown) connected to a PCIe edge connector 918 via a PCIe interconnect 920 which in this example is 16 lanes. The various functions and logic in the embodiments of algorithms described and illustrated herein may be implemented by programmed logic in FPGA 904 and/or execution of software on CPU/SOC 906. FPGA 904 may include logic that is pre-programmed (*e.g.,* by a manufacturing) and/or logic that is programmed in the field (*e.g.,* using FPGA bitstreams and the like). For example, logic in FPGA 904 may be programmed by a host CPU for a platform in which IPU 900 is installed. IPU 900 may also include other interfaces (not shown) that may be used to program logic in FPGA 904. In place of QSFP modules 908, wired network modules may be provided, such as wired Ethernet modules (not shown).

CPU/SOC 906 employs a System on a Chip including multiple processor cores. Various CPU/processor architectures may be used, including but not limited to x86, ARM^{®}, and RISC architectures. In one non-limiting example, CPU/SOC 906 comprises an Intel^{®} Xeon^{®}-D processor. Software executed on the processor cores may be loaded into memory 914, either from a storage device (not shown), for a host, or received over a network coupled to QSFP module 908 or QSFP module 910.

As further shown in Figure 9, IPU/DPU FW 608 is stored in NV memory 916, while all or a portion of software components, including shows shown in dashed box 922, may be initially stored in NV memory 916 and loaded into memory 914 or may be remotely loaded into memory 914 over a network or fabric. The firmware and software components comprise instructions that are executed on one or more cores in CPU/SoC 906.

Generally, an IPU and a DPU are similar, whereas the term IPU is used by some vendors and DPU is used by others. A SmartNIC is similar to an IPU/DPU except it will generally be less powerful (in terms of CPU/SoC and size of the FPGA). As with IPU/DPU cards, the various functions and logic in the embodiments of processes described and illustrated herein may be implemented by programmed logic in an FPGA on the SmartNIC and/or execution of software on CPU or processor on the SmartNIC.

In addition to use with IPUs and DPUs, the teaching and principles disclosed herein may be applied to Other Processing Units (collectively termed XPUs) including one or more of Graphic Processor Units (GPUs) or General Purpose GPUs (GP-GPUs), Tensor Processing Units (TPUs), Artificial Intelligence (AI) processors or AI inference units and/or other accelerators, FPGAs and/or other programmable logic (used for compute purposes), *etc.* While some of the diagrams herein show the use of CPUs, this is merely exemplary and non-limiting. Generally, any type of XPU may be used in place of a CPU in the illustrated embodiments. Moreover, as used in the following claims, the term "processor" is used to generically cover CPUs and various forms of XPUs.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still cooperate or interact with each other. Additionally, "communicatively coupled" means that two or more elements that may or may not be in direct contact with each other, are enabled to communicate with each other. For example, if component A is connected to component B, which in turn is connected to component C, component A may be communicatively coupled to component C using component B as an intermediary component.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

An algorithm is here, and generally, considered to be a self-consistent sequence of acts or operations leading to a desired result. These include physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers or the like. It should be understood, however, that all of these and similar terms are to be associated with the appropriate physical quantities and are merely convenient labels applied to these quantities.

As discussed above, various aspects of the embodiments herein may be facilitated by corresponding software and/or firmware components and applications, such as software and/or firmware executed by an embedded processor or the like. Thus, embodiments of this invention may be used as or to support a software program, software modules, firmware, and/or distributed software executed upon some form of processor, processing core or embedded logic a virtual machine running on a processor or core or otherwise implemented or realized upon or within a non-transitory computer-readable or machine-readable storage medium. A non-transitory computer-readable or machine-readable storage medium includes any mechanism for storing or transmitting information in a form readable by a machine (*e.g.,* a computer). For example, a non-transitory computer-readable or machine-readable storage medium includes any mechanism that provides (*i.e.,* stores and/or transmits) information in a form accessible by a computer or computing machine (*e.g.,* computing device, electronic system, *etc*.), such as recordable/non-recordable media (*e.g.,* read only memory (ROM), random access memory (RAM), magnetic disk storage media, optical storage media, flash memory devices, *etc*.). The content may be directly executable ("object" or "executable" form), source code, or difference code ("delta" or "patch" code). A non-transitory computer-readable or machine-readable storage medium may also include a storage or database from which content can be downloaded. The non-transitory computer-readable or machine-readable storage medium may also include a device or product having content stored thereon at a time of sale or delivery. Thus, delivering a device with stored content, or offering content for download over a communication medium may be understood as providing an article of manufacture comprising a non-transitory computer-readable or machine-readable storage medium with such content described herein.

The operations and functions performed by various components described herein may be implemented by software running on a processing element, via embedded hardware or the like, or any combination of hardware and software. Such components may be implemented as software modules, hardware modules, special-purpose hardware (*e.g.,* application specific hardware, ASICs, DSPs, *etc*.), embedded controllers, hardwired circuitry, hardware logic, *etc.* Software content (*e.g.,* data, instructions, configuration information, *etc*.) may be provided via an article of manufacture including non-transitory computer-readable or machine-readable storage medium, which provides content that represents instructions that can be executed. The content may result in a computer performing various functions/operations described herein.

As used herein, a list of items joined by the term "at least one of" can mean any combination of the listed terms. For example, the phrase "at least one of A, B or C" can mean A; B; C; A and B; A and C; B and C; or A, B and C.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. A method for hot upgrade or live recovery of storage backend software running on an Infrastructure Processing Unit (IPU) or Data Processing Unit (DPU), the storage backend software used to access one or more storage devices operatively coupled to the IPU or DPU, comprising:
saving configuration space and queue related information associated with Input-Output (IO) operations for at least one storage device operatively coupled to the IPU or DPU;
performing a hot upgrade or live recovery of the storage backend software; and
restoring the configuration space and queue related information and restarting IO operations at a last completed point prior to initiation of the hot upgrade or live recovery.

2. The method of claim 1, wherein the IPU or DPU is coupled to a host providing a front-end host driver, further comprising reassociating newly started or restarted backend software with the front-end host driver following the hot upgrade or live recovery of the storage backend software.

3. The method of claim 2, wherein the front-end host driver comprises a host virtio-blk device.

4. The method of any of the preceding claims, further comprising:
executing a primary process on the IPU or DPU;
allocating, via the primary process, shared memory for a hot upgrade or live recovery;
executing a secondary process on the IPU or DPU; and
utilizing, via the secondary process, the shared memory for the hot update or live recovery to facilitate the hot upgrade or live recovery.

5. The method of any of the preceding claims, wherein the IPU or DPU is coupled to a host running a front-end host driver, further comprising:
implementing a ring queue shared between the front-end host driver and a backend controller created by the storage backend software;
maintaining a plurality of indexes for the ring queue; and
using at least a portion of the plurality of indexes to track inflight IO operations in connection with the hot upgrade or live recovery of the storage backend software.

6. An apparatus comprising:
a host interface to interface with a compute host;
one or more input-output (IO) interfaces configured to connect to a local or remote storage device;
a processor;
memory, coupled to the processor; and
instructions including storage backend software configured to be executed on the processor to enable the apparatus to:
save configuration space and queue related information associated with Input-Output (IO) operations for at least one storage device operatively to be coupled to the one or more IO interfaces;
facilitate a hot upgrade or live recovery of the storage backend software; and
restore the configuration space and queue related information and restart IO operations at a last completed point prior to initiation of the hot upgrade or live recovery.

7. The apparatus of claim 6, wherein the compute host employs a front-end host driver, and wherein execution of the instructions further enables the apparatus to reassociate newly started or restarted storage backend software with the front-end host driver following the hot upgrade or live recovery of the storage backend software.

8. The apparatus of claim 6 or 7, wherein the instructions include instructions for:
a primary process that allocates a portion of the memory as shared memory for a hot update or live recovery; and
a secondary process the utilizes the shared memory for the hot update or live recovery to facilitate a portion of the hot upgrade or live recovery.

9. The apparatus of claim 8, wherein execution of the instructions creates a backend controller via execution of the secondary process that is used to access at least one local or remote storage device via the one or more IO interfaces.

10. The apparatus of any of claims 6-9, wherein the apparatus comprises an Infrastructure Processing Unit (IPU) or Data Processing Unit (DPU).

11. The apparatus of any of claims 6-10, wherein the compute host employs a front-end host virtio-blk device driver, and wherein the apparatus further comprises a Nonvolatile Memory Express (NVMe)/virtio-blk physical function and virtual function (PF/VF).

12. A system comprising:
a compute host including a front-end host storage device driver;
an Infrastructure Processing Unit (IPU) or Data Processing Unit (DPU) coupled to the compute host, having storage backend software used to access one or more storage devices operatively coupled to the IPU or DPU and configured to,
enable the compute host to access at least one of the one or more storage devices via the front-end host storage device driver;
save configuration space and queue related information associated with Input-Output (IO) operations for at least one of the one or more storage device operatively coupled to the IPU or DPU;
facilitate a hot upgrade or live recovery of the storage backend software; and
restore the configuration space and queue related information and restart IO operations at a last completed point prior to initiation of the hot upgrade or live recovery.

13. The system of claim 12, wherein the IPU or DPU is further configured to reassociate newly started or restarted backend software with the front-end host storage device driver following the hot upgrade or live recovery of the storage backend software.

14. The system of claim 12 or 13, wherein the IPU or DPU is further configured to:
execute a primary process;
allocate, via the primary process, shared memory for a hot update or live recovery;
execute a secondary process; and
utilize, via the secondary process, the shared memory for the hot update or live recovery to facilitate the hot upgrade or live recovery.

15. The system of any of claims 12-14, wherein the system is configured to:
implement a ring queue shared between the front-end host storage device driver and a backend controller created by the storage backend software;
maintain a plurality of indexes for the ring queue; and
utilize at least a portion of the plurality of indexes to track inflight IO operations in connection with the hot upgrade or live recovery of the storage backend software.
